# EUROPEAN PATENT APPLICATION

(11) **EP 3 038 012 A1**
(43) Date of publication of application: **29.06.2016**
(21) Application number: 14826504.4
(22) Date of filing: 17.07.2014
(51) Int. Cl.: G06K 9/00, A61H 3/06, G09B 21/00

(54) **SIGNAL FOR IDENTIFYING TRAFFIC LIGHTS FOR COMPUTER VISION**

(30) Priority: 17.07.2013 ES 201300693
(71) Applicant: Kaparazoom SLU, 46018 Valencia (ES)
(72) Inventor: VILLAR CLOQUELL, Javier, E-46008 Valencia (ES)
(74) Representative: Montaner Marroco, Alberto
(86) International application number: PCT/ES2014/000125
(87) International publication number: WO 2015/007929

(57) **Abstract**

The invention relates to a signal for identifying traffic lights for pedestrians, using an electronic urban guidance device with computer vision, for blind or visually impaired people. The signal is cylindrical or prismatic, has marks that contain encoded information such as the identification of the traffic light, and information characterizing the traffic light and the crossing. The signal can be recognized in 360° and there are versions for a smaller viewing angle. The main signal for identifying the traffic light can have secondary identification signals. In adverse viewing conditions caused by the light or the weather, the signal can be reflective, fluorescent, phosphorescent or can light up in visible, infrared or ultraviolet ranges of the electromagnetic spectrum. Said identification signal can be used to identify other types of urban elements.

## Description

### Technical Field

The present invention is comprised within the field of urban signs and guidance for blind or visually impaired people interpreted by computer vision.

### Background of the invention

In the prior art there are many inventions and products which adapt or improve traffic lights for blind or visually impaired people to cross the road safely at crossings where traffic lights are not adapted.

There are traffic lights that emit sound signals to help blind or visually impaired people cross the road when the pedestrian light is green. These lights work well when crossings are simple. However, when crossings are in various directions or include pedestrian islands, traffic lights with sound signals may confuse blind people, posing a hazard of impact or crushing.

There are traffic lights where blind pedestrians themselves can trigger the audible signals by remote control, electromagnetic signals or other systems depending on the state of the traffic light, as shown in patents GB2212960, JP8191854 or CN2671547. These traffics lights pose the same problem already discussed for traffic lights with sound signals.

There are traffic lights adapted for visually impaired people which modify the forms of lights, to facilitate interpretation by people with visual impairment, as shown in Patent CN201725434. These lights do not offer a solution for blind people to cross the road.

There are traffic lights with camera and computer vision software to detect if there are pedestrians or vehicles at crossings. These traffic lights facilitate activation when a pedestrian comes, as shown in patents CN101799987 or ES2214953. These computer vision systems are unable to recognize blind or visually impaired people to help them cross the road safely.

There are guides buried in the ground with magnetic cables, lead wires or RFID tags, which, through a sensor, indicate the status of the traffic light and the path to be followed for blind people to cross the street, as shown in patents DE3711469, CN101239014 or CN102218008.

These systems to guide blind people have very high installation and maintenance costs. They limit the movements of blind people to areas with guides and force them to use special detection devices they must acquire themselves.

One of the main reasons why public authorities do not adapt or install traffic lights to ensure that blind or visually impaired people can cross the road safely is their cost of acquisition, installation and maintenance. Installing traffic lights for blind or visually impaired pedestrians that are only used occasionally implies a cost that the governments concerned are rarely willing or able to bear. In some locations, such adapted traffic lights are thus limited exclusively to the city center or to crosses with much pedestrian traffic.

There are guidance systems with specific electronic devices, mobile phones, goggles with camera or canes using GPS positioning systems and databases with maps to help blind people orient themselves in urban environments and devise routes to get from one place to the other. This is shown, among others, in Patent JP2000325389 which relates to a pair of goggles with camera that provide assistance in guiding people through computer vision. These devices are highly useful.

There are tags to improve image analysis through computer vision used to provide a variety of information such as web links, prices, emails, etc. In Augmented Reality environments, tags are also used to position virtual objects. Such tags are often printed out in two colors, a light one and a dark one, so that the result is high in contrast.

There are applications in research and development stage that use computer vision to recognize the state of traffic lights, using electronic devices such as mobile phones to acoustically communicate the state of the traffic light to the blind person. The "Computer Vision and Pattern Recognition Group", the University of California and the Rey Juan Carlos University are developing applications for the detection of the state of traffic lights for both pedestrians and vehicles.

Devices using computer vision software to detect traffic lights and identify their state face certain limitations. Some of the challenges to the recognition of traffic lights with computer vision software are:
- To ensure that the software correctly recognizes the traffic light, the camera has to face the relevant traffic light straight ahead or with a very small variation angle. If the camera faces it from one side, it will interpret it as a traffic light facing elsewhere and will not identify it as the one to be used to cross the road.
- At crossings where traffic lights are at a distance greater than 20 meters, there is no guarantee that the software detects that there is a traffic light. If the traffic light is not recognized as such by the software, its state cannot be identified.
- Crossings where there is more than one traffic light facing frontally confuse the computer vision software, since it may recognize a traffic light that is not the one pedestrians want to use.
- At crossings with pedestrian islands, the software may wrongly interpret the state of the traffic light in cases where both traffic lights are not in the same state.
- In darkness or limited visibility conditions, the computer vision software cannot recognize the contours of the traffic light and therefore it cannot recognize it as being a traffic light.
- There is a variety of models of traffic lights. The computer vision software may face great challenges and perform poorly if it is to recognize multiple models of traffic lights: Their specifications may differ highly in terms of size, shape, lamp colors, number of lights, distribution of lights, presence of a countdown timer, etc.
- Electronic guidance devices are carried by a pedestrian, who may be stationary or moving. Capture of motion images creates distortion and fuzziness in the images, which poses a challenge to the recognition of traffic lights by computer vision software.
- When the camera stops detecting the traffic light, it cannot know if the blind person is following the correct path.
- Global positioning systems like GPS have a margin of error of between 3 and 10 meters. This deviation with regard to the current position does not pose a problem in most applications. However, in the case of electronic guiding devices with computer vision, if the location of the traffic light is determined by GPS, there are no guarantees that the correct traffic light will be identified.

All these problems involved in the recognition of pedestrian traffic lights and their status may cause serious injury or death to blind or visually impaired pedestrians.

No technical solutions as described in the present invention are known to solve the aforementioned problems.

### Object of the Invention

Provide pedestrian traffic lights with a sign that identifies them to improve their recognition by computer vision with electronic guidance devices for blind or visually impaired people.

### Description of the Invention

The present invention provides solutions to the various problems that arise in the recognition of pedestrian traffic lights by computer vision.

It presents a new signal containing information that identifies each traffic light and having means to ensure the effectiveness of the devices and systems for computer vision recognition.

A great advantage of this invention over others is the low cost of adapting the existing traffic lights or including the invention in new traffic lights. These signals need no regular maintenance and their life span equals or exceeds that of the traffic light.

Pedestrians, including blind or partially sighted people moving in urban environments, use pedestrian traffic lights or crossings to cross the road safely. To get from one point to another in an urban environment, blind or visually impaired people use electronic guidance devices implemented in specific electronic devices, canes, mobile phones or goggles. Such urban guiding devices feature components such as cameras, audio, headsets, vibrator, tactile interfaces, gyroscope, accelerometer, magnetic compass, GPS, internet access and microprocessor. These guiding devices calculate the route using maps, know the position of the pedestrian using GPS systems and indicate the direction through acoustic, vibratory or tactile signals that are interpreted by the blind or visually impaired person. Guiding electronic devices using computer vision have a camera that captures images and software or framework which interprets the images, recognizing the state of the traffic lights.

Computer vision software can recognize tags that contain information, such tags being usually represented in high-contrast colors, one light and one dark.

The identification of traffic lights by computer vision is done through a signal, which may be cylindrical or prismatic, with at least 4 tags, covering 360° with respect to the vertical longitudinal axis of the pedestrian traffic lights. This permits recognition of traffic signals from any angle and not only frontally. It also lets pedestrians know from which direction they are approaching with respect to the traffic light. Each tag has a recognition frame for computer vision and coded information to be read with an electronic guiding device using computer vision. Each tag contains information identifying the traffic light and the additional specific identification of each tag. The specific and unambiguous identification of each traffic light ensures that the computer vision and guiding software is interpreting the position and state of the correct traffic light. Each tag may also contain information on the traffic light model, the signal model, the geolocation of the traffic light, its direction, the position of the tag with respect to the lights, the signal height in relation to the ground, the width of the pedestrian crossing area, the width of the road, the number of lights of the traffic light, their distribution and form, the duration of the traffic light in different states, the direction of circulation of vehicles, the state of the traffic light, the limits of the pedestrian crossing area, if the crossing is fitted with a double traffic light, if the crossing has a pedestrian island and additional information. All information that may be contained in the signal can also be accessed from a database of the electronic device or online with the code that identifies the traffic light. All information associated with the traffic light contributes to a correct interpretation by the computer vision software and to safer guidance of pedestrians. The information is encoded; this encoding can be represented in different ways and the size of the coding may vary according to the amount of information to be contained or the distance at which it must be recognized. The coding information is contained in the tag and can thus be represented in many ways, using binary code symbols such as bar codes, grids of cubes, grids of circles, grids of pictographs, alphabetic characters, numeric characters, symbols or pictograms. The characterization of the traffic light solves the problems associated with the recognition of each of the different models on the market. The computer vision system knows which traffic light model it is visualizing and its features and can use appropriate algorithms to recognize the specific state of the traffic light (green light to go ahead, red light to wait and timers). The signal and tag dimensions are defined for each model, including at least one vertical line and at least one horizontal line, with which their orientation relative to the ground is determined. Knowing the tag dimensions of the signal of an specific traffic light, the computer vision software can triangulate the direction, orientation and distance of a pedestrian with respect to the traffic light. The guiding devices may include compasses, gyroscopes and other electronic components, with which the information received by the camera can be weighted with its spatial orientation to adjust the correct triangulation; in addition, the optical distortion of the camera should be compensated. In Artificial Vision, this is the calibration of the camera. The vertical and horizontal lines of the tag serve as references for triangulation. With proper triangulation of the pedestrian, it can be ensured that the pedestrian is crossing within the pedestrian crossing area and in the right direction, with a precision that cannot be achieved with GPS positioning. The signal has conventional fastening means, is attached to the traffic light or has a separate mast and features conventional anchoring means such as screws, clamps, bonding or magnetic attachment.

The size of the signal can vary according to the crossing distance, so that the computer vision software is able to identify it at the distance required, thus reducing the limitations that such distance may entail.

The ID value assigned to the traffic light is encoded in the signal. The computer vision system decodes this information, resulting in a string of alphanumeric characters. Thus, a value for the traffic light ID is achieved. The ID value for the traffic light must guarantee that the computer vision system does not make errors in the detection of the pedestrian traffic light. The value identifying the traffic light can be indicated as follows:
- The traffic light ID value can be defined with a unique global number for each traffic light
- The traffic light ID value can be defined with a unique number for each location and a unique number for each traffic light.
- The traffic light ID value can be defined with a unique number for each crossing. Crossings are determined by geolocation or by a unique number for each crossing.

The value for identifying each of the tags in a signal is defined by the number of tags in the signal, from 1 to n. Tag 1 is the one oriented in the direction of the lights of the pedestrian traffic light.

The installation of the signal is made unique by gathering all the identifying information of the pedestrian traffic light. This information is entered into the signal tag and / or in a local or online database. Data on pedestrian crossing are obtained by measuring distances of the different elements that make up the crossing, such as the limits of the pedestrian crossing area; or how the traffic light relates to other traffic lights. Characterization of traffic lights with IDs solves the problems faced by computer vision software with crossings with pedestrian islands or in cases where pedestrians do not walk straight ahead to the traffic light.

In cases where it is not necessary that the traffic light is recognized 360° around or where cost savings need to be achieved, the signal has 1-4 tags that do not cover 360° with respect to the vertical axis of the lights of the pedestrian traffic light, but a range of between 1° and 359°. In some particular situations, these signals are recommended to avoid problems caused by reflection, which may confuse the computer vision software.

A version is provided in which the identification signal is integrated with the lights of the pedestrian traffic light, featuring a tag that contains information identifying the traffic light in each of the lights, visible when the lights are activated. This is a cost-effective solution for the identification of traffic lights and has advantages under low visibility conditions. This version is applicable to simple crossings.

When the pedestrian is crossing the road, the path followed by other pedestrians or the proximity to the signal may prevent the traffic light or its identifying signal from being detected. This might pose a problem for the correct orientation of blind pedestrians. To solve this problem, a version is provided in which the main signal has at least one secondary signal with its own mast or is anchored on a structure through conventional means such as screws, clamps, bonding or magnetic fastening. The secondary signal tags contain information identifying the traffic light with which they interact. Each secondary signal tag may also contain information on the traffic light tag, the distance and orientation relative to the traffic light, the model of the secondary signal, the location of the secondary signal, the height of the secondary signal relative to the ground and the distance and position of the pedestrian crossing area. These secondary signals can be located in positions that allow recognition throughout the pedestrian crossing area. To solve the problem of discontinued detection of the traffic light identification signal, the computer vision software can use points of reference to assist in guiding.

Many networks of urban traffic lights are connected to central servers which know the current status of each traffic light. If they have access to these data, electronic guidance devices can know the state of a particular traffic light in real time or get information on the duration of each go-and-stop interval. With access to this information, guiding system can function without recognizing the state of the traffic light by computer vision and know the state of the traffic light even if the camera does not see the pedestrian traffic light. Another option is that traffic lights emit a radio frequency signal of their state and this signal is recognized by an antenna integrated in the electronic device.

To solve the problems of recognition of traffic lights by computer vision in low light conditions or in adverse conditions such as rain, fog or snow various versions of the identification signal for pedestrian traffic lights are provided in which:
The light-colored area of the tag shows reflective or fluorescent or phosphorescent characteristics using conventional paints or coatings with these properties.

In other versions, the contrast between the light- and dark-colored areas of the tag is achieved in the infrared or ultraviolet ranges of electromagnetic radiation using paints and coatings that reflect these ranges of radiation. This version of the signal may involve an adaptation of the cameras of electronic guiding devices using optical filters or camera sensors that support these ranges of electromagnetic radiation. The encoding of information, which is not visible to the human eye, prevents acts of vandalism seeking to change the information contained in the signal.

In other versions, the signal is designed to include a light source illuminating the light-colored area of the tag. This light source has a connection to the electronic circuit of the traffic light that activates the go-ahead light or has at least one photo-electronic sensor that detects the activation of the go-ahead light to activate or deactivate the light source of the signal. The light source can emit white-colored light or light in the same color as the pedestrian signal. This version has another advantage: The status of the signal may be determined without being in front of it.

In other versions, the signal has a light source that emits in the infrared or ultraviolet range of electromagnetic radiation. This version also prevents that the light emitted by the signal may confuse drivers or pedestrians, since the light is not visible to the human eye.

As discussed throughout this report, the aim of the present invention is to identify pedestrian traffic lights through the new signal disclosed herein. This signal is recognized by electronic devices with camera and computer vision software used by blind or visually impaired people. This invention can be extrapolated to the identification of other urban elements that can be of assistance in guiding blind or visually impaired people or providing additional information. Thus, the signal tag is fitted with an identifier for other objects that are part of the urban environment, such as traffic signals, pedestrian crossings, safe crossing areas or public transportation stops.

### BRIEF DESCRIPTION OF THE DRAWINGS:

In order to better understand the concepts described in this report, drawings are attached, as examples only, with the relevant representation of the signal for identifying traffic lights by computer vision.

### Description of Figures

Figure 1: Crossing with pedestrian traffic light (4) and identifying signal (1) for computer vision. Blind or visually impaired pedestrian (11) crossing the road with an electronic guiding device (8) able to orient itself and to determine the state of the traffic light by taking the signal (1) as reference and obtaining data that characterize the traffic light and the crossing through the signal, a database (9) on the device or a database (10) online. The longitudinal axis (3) can also be seen.
Figure 2: Model of signal for identifying traffic lights by computer vision with cylindrical shape (1') for 360° (2) recognition, where (3) is the signal's longitudinal axis, (6) represents a tag for recognition and (7) the information encoded on the tag.
Figure 3: Model of signal for identifying traffic lights by computer vision with polygonal shape (1") with tags (6) for 360° (2) recognition, longitudinal axis (3), and the information encoded on the tag (7).

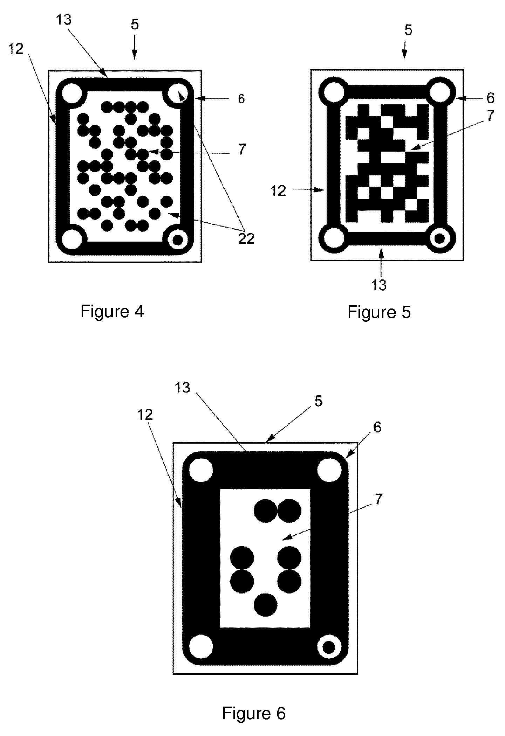

Figure 4: Detailed view of the signal tag (5) showing the recognition frame (6), the horizontal lines (13), the vertical lines (12), and the encoded information (7) contained in the signal. The light-colored areas (22) of the signal are also shown.
Figure 5: Detailed view of the signal tag (5) showing the recognition frame (6), the horizontal lines (13), the vertical lines (12), and the encoded information (7) contained in the signal.
Figure 6: Detailed view of the signal tag (5) showing the recognition frame (6), the horizontal lines (13), the vertical lines (12), and the encoded information (7) contained in the signal.

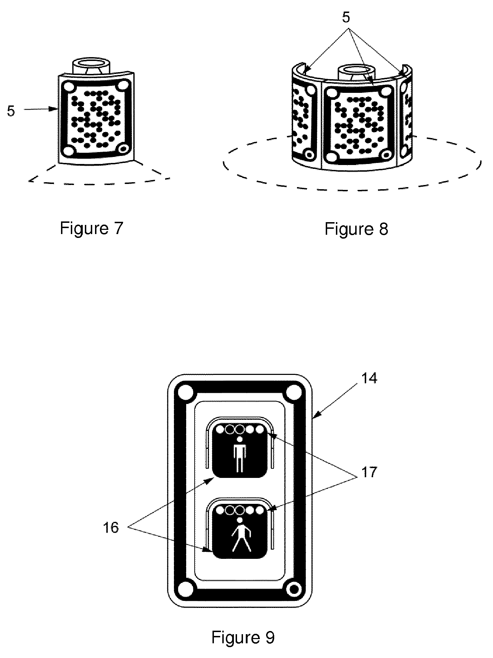

Figure 7: Signal with a tag (5), for recognition at an angle of less than 360°.
Figure 8: Signal with 3 tags (5), for recognition at an angle of less than 360°.
Figure 9: Signal with a tag (14) integrated with the lights (16) of the traffic light, with the encoded identifier (17) of the traffic light in the lights.
Figure 10: Crossing with a traffic light and a pedestrian, with a primary identification signal (1) and a secondary identification signal (19), with its secondary tag (21). The secondary signal is placed on a separate mast (20). The safe pedestrian crossing area is shown (18).
Figure 11: Signal (23) for identifying traffic lights by computer vision, with a light source (24), where the light-colored area of the tags (22) lets the light through. Circuits connecting the light source to photo-sensors (27) or to the electronic circuit (26) that monitors the traffic lights.

### DESCRIPTION OF A PREFERRED EMBODIMENT:

The preferred embodiment is described as follows by way of example, with the materials to be used for manufacture of the components of the signal for identifying traffic lights by computer vision being independent to the object of the invention, as are the methods of application and all accessory details that arise, provided that they do not affect the essentials of the invention.

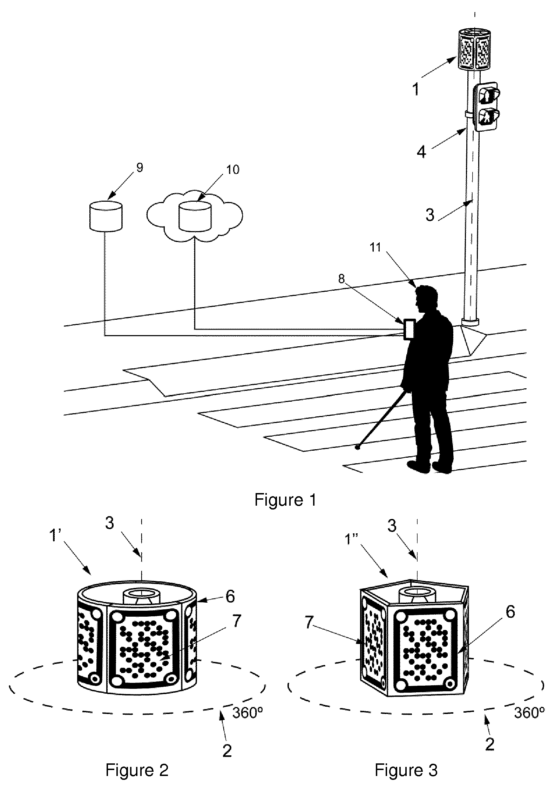

The signal (1) of this preferred embodiment, Figures 1 and 2, is cylindrical (1'), Figure 2. The signal has 4 tags (5), Figure 2, covering 360° (2), Figure 2, with respect to the vertical longitudinal axis (3) of the lights of the pedestrian traffic light (4), Figure 1. Each tag (5), Figure 2, has a recognition frame (6) for computer vision and includes encoded information (7) with black circles and white empty areas. The identification of the traffic light takes place through a number of city and a number of traffic light. Any other information characterizing the traffic light is stored in a database online (10), Figure 1, containing: traffic light model, geolocation of the traffic light, orientation of the traffic light, position of the tag relative to the lights, signal height relative to the ground, number and distribution of lights of the traffic light, direction of movement of vehicles, limits of the pedestrian crossing area.

Each tag has a white perimeter frame consisting of two vertical lines (12) and two horizontal lines (13).

The signal tag is coated with black paint for dark-colored areas and with a coating including a background of fluorescent paint, a coat of reflective microspheres and a final layer covering all tags consisting of a transparent water-based paint with anti UV protection, for light-colored areas. The signal is attached to the traffic light mast with two clamps, one on the top and one on the bottom. These clamps permit the adjustment of the signal perpendicularity with respect to the lights.

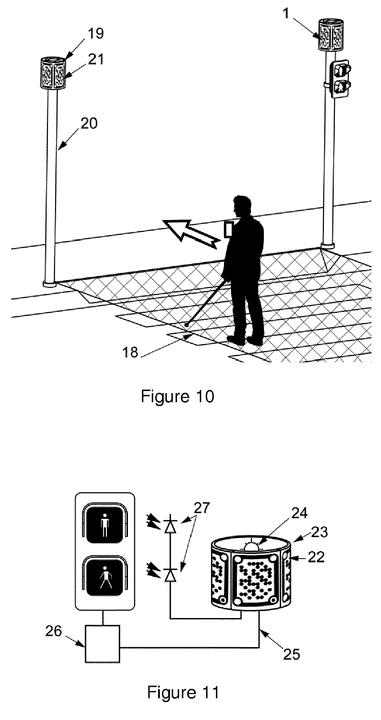

The electronic guiding device triangulates the position of the pedestrian with respect to the signal to ensure that the pedestrian crosses within the pedestrian crossing area (18), Figure 10. When the electronic guiding device detects through its camera and computer vision software that the traffic light is green, it gives feedback to pedestrian with audio signals meaning "Green light". If the pedestrian is within the pedestrian crossing area and in the right direction, no additional message is communicated. If the pedestrian is out of the pedestrian crossing area or deviates from the direction, the message "Right" or "Left" is communicated to correct the direction. The electronic guiding device reduces communications to a minimum, so that the blind person can use his/her ears to detect his/her surroundings.

The electronic guiding device with camera recognizes the identification signal and its tag with computer vision software. The software calculates the distance and direction of the pedestrian relative to the traffic light. When the pedestrian is in a position where the lights of the traffic lights can be detected, the computer vision software recognizes the state of the traffic light, indicating the blind person to cross if the traffic light is green or to stops if it is red. The GPS and the sensors of the electronic guiding device confirm the position and direction of the pedestrian on the correct path for the route.

## Claims

1. System for identifying traffic lights for blind or visually impaired people **characterized by** featuring a signal (1), preferably cylindrical (1') or prismatic (1") with at least 4 tags (5) covering 360° (2) with respect to the vertical axis (3) of the lights of the pedestrian traffic light (4). Each tag (5) has a recognition frame (6) for computer vision and encoded information (7) to be interpreted with an electronic guidance device (8) through computer vision; each tag contains information identifying the traffic light and specific information identifying the surroundings. Each tag may also contain information on: traffic light model, signal model, geolocation of the traffic light, orientation of the traffic light, position of the tag relative to the lights of the traffic light, signal height relative to the ground, width of the pedestrian crossing area, width of the road, number, distribution and form of lights of the traffic light, duration of the traffic light in different states, direction of movement of vehicles, traffic light status, limits of the pedestrian crossing area, if there is a double traffic light in the crossing, if there is a pedestrian island in the crossing and additional information; the signal and the tag having a defined dimension for each model and at least one vertical line (12) and at least one horizontal line (13) which determine their orientation relative to the ground; the signal has conventional fasteners such as clamps or flanges, and is integral to the traffic light or has a separate mast.

2. System for identifying traffic lights for blind or visually impaired people according to Claim 1, **characterized by** having 1-4 tags (5) covering a range of between 1° and 359° with respect to the vertical axis of the lights of the pedestrian traffic light.

3. System for identifying traffic lights for blind or visually impaired people according to Claim 2, **characterized by** having one tag (14) related to the lights (16) of the pedestrian traffic light and having the information identifying the traffic light (17) in each of the lights of the pedestrian traffic light; the traffic light identification is visible when the lights are activated.

4. System for identifying traffic lights for blind or visually impaired people according to Claim 1, **characterized by** featuring at least one secondary signal (19) having its own mast (20) or anchored on a structure through conventional means such as screws, clamps, bonding or magnetic fastening. The tags (21) of the secondary signal contain information identifying the traffic light with which they interact. Each secondary signal tag may also contain information on the traffic light tag (1), distance and orientation relative to the traffic light, model of the secondary signal, location of the secondary signal, height of the secondary signal relative to the ground and distance and position of the pedestrian crossing area.

5. System for identifying traffic lights for blind or visually impaired people according to claims 1 or 2, **characterized by** the fact that the light-colored area (22) of the tag shows reflective or fluorescent or phosphorescent characteristics using conventional paints or coatings with these properties.

6. System for identifying traffic lights for blind or visually impaired people according to claims 1 or 2, **characterized by** the fact that the contrast between the light- and dark-colored areas of the tag is achieved in the infrared or ultraviolet ranges of electromagnetic radiation using paints and coatings that reflect these ranges of radiation.

7. System for identifying traffic lights for blind or visually impaired people according to claims 1 or 2, **characterized by** the fact that the signal (23) is made of a material that lets the light of the light source (24) which illuminates the light-colored areas (22) of the tag through. The light source has a connection (25) to the electronic circuit (26) of the traffic light that activates the go-ahead light or has at least one photo-electronic sensor (27) that detects the go-ahead light, to activate or deactivate the light source of the signal. The light source can emit white-colored light or light in the same color as the pedestrian signal.

8. System for identifying traffic lights for blind or visually impaired people according to Claim 7, **characterized by** the fact that the signal has a light source (24) emitting in the infrared or ultraviolet range of electromagnetic radiation.

9. System for identifying traffic lights for blind or visually impaired people according to claims 1 or 2, **characterized by** the fact that the signal tag is fitted with an identifier for other objects that are part of the urban environment, such as traffic signals, pedestrian crossings, safe crossing areas or public transportation stops.
